# EUROPÄISCHE PATENTSCHRIFT

(11) **EP 1 526 992 B1**
(45) Veröffentlichungstag und Bekanntmachung des Hinweises auf die Patenterteilung: **02.12.2009**
(21) Anmeldenummer: 03787583.8
(22) Anmeldetag: 21.02.2003
(51) Int. Cl.: B60S 1/34, B60S 1/16

(54) **SCHEIBENWISCHVORRICHTUNG, INSBESONDERE FÜR EIN KRAFTFAHRZEUG**
WINDOW-WIPING DEVICE, PARTICULARLY FOR A MOTOR VEHICLE
DISPOSITIF D'ESSUIE-GLACE, NOTAMMENT POUR VEHICULES

(30) Priorität: 26.07.2002 DE 10234097
(43) Veröffentlichungstag der Anmeldung: 04.05.2005
(73) Patentinhaber: ROBERT BOSCH GMBH, 70442 Stuttgart (DE)
(72) Erfinder: ZIMMER, Joachim, 77880 Sasbach (DE); HURST, Richard, D-77656 Offenburg (DE); FLEISCHER, Claus, 77815 Buehl (DE); MOOSMANN, Johannes, 77830 Buehlertal (DE)
(86) Internationale Anmeldenummer: PCT/DE2003/000551
(87) Internationale Veröffentlichungsnummer: WO 2004/016481

(56) Entgegenhaltungen:
- EP-A- 1 215 094
- US-A- 4 736 484
- US-A- 5 327 614

## Beschreibung

### Stand der Technik

Die Erfindung betrifft eine Scheibenwischvorrichtung nach Gattung des unabhängigen Anspruchs.

Es sind schon zahlreiche Scheibenwischvorrichtungen für Windschutzscheiben von Kraftfahrzeugen bekannt, die ein Antriebsteil, ein Getriebe und ein, das Getriebe umschließendes Gehäuse aufweisen, aus dem eine Abtriebswelle ragt, an der ein Wischerarm befestigt werden kann. Das Getriebe ist hierbei üblicherweise als Schneckengetriebe ausgebildet. Ein ungleichmäßig übersetzendes Kurbelgetriebe, welches die Drehbewegung der Abtriebswelle in eine Pendelbewegung der Wischerwelle übersetzt, ist zwischen der Abtriebswelle und der den Wischerarm antreibenden Wischerwelle dem Schneckengetriebe nachgelagert. Das Kurbelgetriebe ist hierbei auf den jeweiligen Fahrzeugtyp abgestimmt, weshalb und identische Motor-Getriebe-Kombinationen für zahlreiche Scheibenwischanlagen verwendet werden können.

Zunehmend wird bei modernen Scheibenwischvorrichtungen jedoch auf ein Kurbelgetriebe zwischen Motor und Wischerwelle verzichtet und der Wischerarm direkt mit der Abtriebswelle des Schneckengetriebes verbunden. Bei derartigen Vorrichtungen wird jedoch bei jedem Fahrzeugtyp eine andere Scheibenwischvorrichtung benötigt, da die Eigenschaften und Abmessungen der Abtriebswellen bei den einzelnen Fahrzeugtypen unterschiedlichen Erfordernissen genügen müssen.

### Vorteile der Erfindung

Die erfindungsgemäße Scheibenwischvorrichtung mit den Merkmalen des unabhängigen Anspruchs hat eine mehrteilige Ausbildung der Abtriebswelle die für zahlreiche Fahrzeugtypen für die gleiche Motor-Getriebe-Kombination verwendet werden kann. Dies wird dadurch erzielt, daß jeweils nur ein Teil der Abtriebswelle als fahrzeugspezifischer Abschnitt ausgebildet ist.

Dokument EP-A-1215094 offenbart eine Scheibenwischvorrichtung gemäß dem Oberbegriff des Anspruchs 1.

Die Abtriebswelle weist zumindest einen ersten, drehfest mit dem Getriebe verbundenen Getriebeabschnitt als erstes Teil und als zweites Teil einen zweiten, drehfest mit dem Wischerarm verbindbaren Armabschnitt auf.

Armabschnitt und Getriebeabschnit sind über eine Kupplung miteinander verbunden, so ergibt sich eine kostengünstige und flexible Scheibenwischvorrichtung.

Die Kupplung ist dabei als Steckverbindung ausgebildet, damit die Vorrichtung in einfacher Weise beim Kraftfahrzeughersteller zu montieren ist.

Der Getriebeabschnitt weist eine Verjüngung auf der in eine Öffnung des Armabschnittes einführbar ist, um eine kostengünstige und gut handbare Kupplung zu erreichen.

Der Drehmomentenübertragung wird dadurch erzielt, dass die Verjüngung Längsnuten aufweist und die Öffnung des Armabschnittes gegen die Verjüngung verstemmt ist.

Weiterhin ist es vorteilhaft, wenn die Verjüngung als Außenvielkant und die Öffnung als Innenvielkant ausgebildet ist, da bei einer derartigen Ausbildung die einzelnen Abschnitte der Abtriebswelle nicht zwingend verstemmt werden müssen und trotzdem eine hohe

Drehmomentenübertragung gewährleistet ist. Außerdem können die Abschnitte der Abtriebswelle auf diese Weise auch leicht wieder voneinander gelöst werden, was bei einem Austausch der Scheibenwischvorrichtung von Vorteil ist.

Weist der Armabschnitt einen Konus auf an den sich ein Gewindeabschnitt anschließt, so können gängige Scheibenwischerarme bei der erfindungsgemäßen Scheibenwischvorrichtung verwendet werden.

### Zeichnung

Ausführungsbeispiel der Erfindung sind in der Zeichnung dargestellt und in der nachfolgenden Beschreibung näher erläutert. Es zeigen:
Figur 1 eine erfindungsgemäße Scheibenwischvorrichtung in schematischer Darstellung,
Figur 2 eine Abtriebswelle einer erfindungsgemäßen Scheibenwischvorrichtung,
Figur 3 eine Abtriebswelle einer erfindungsgemäßen Scheibenwischvorrichtung nach Figur 2 in einer Variation und
Figur 4 der Getriebeabschnitt der Abtriebswelle aus Figur 3 in Detail.

### Beschreibung der Ausführungsbeispiele

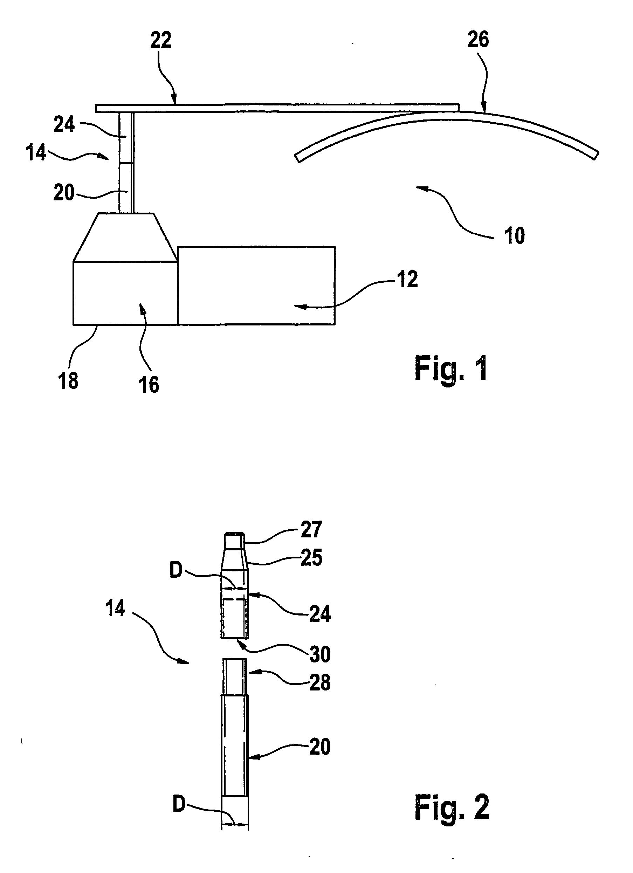

In Figur 1 ist eine erfindungsgemäße Scheibenwischvorrichtung 10 in schematischer Darstellung gezeigt. Diese besteht im wesentlichen aus einem Antriebsteil 12 welches als elektronisch reversierbarer Elektromotor ausgebildet ist. Natürlich sind auch andere Antriebsarten möglich. Der Elektromotor 12 treibt eine nicht gezeichnete Ankerwelle an, welche an ihrem motorabgewandten Ende eine Schnecke trägt, die ein Schneckenrad antreibt. Das Schneckenrad ist drehfest mit einer zylindrischen Abtriebswelle 14 verbunden. Schnecke und Schneckenrad bilden ein Getriebe 16, welches von einem Getriebegehäuse 18 umschlossen ist. Die Abtriebswelle 14 ist dabei mehrteilig ausgebildet und weist einen, aus dem Getriebegehäuse 18 ragenden Getriebeabschnitt 20 als erstes Teil und einen, drehfest mit einem Wischerarm 22 verbundenen, zylindrischen Armabschnitt 24 als zweites Teil auf, das von einem Konus 25 abgeschlossen ist, der in einen Gewindeabschnitt 27 mündet. Der Wischerarm 22 weist zwei Enden auf und ist an dem der Abtriebswelle 14 entgegengesetzten Ende, mit einem Wischblatt 26 verbunden.

Das Getriebe 16 muss sich natürlich nicht auf ein bloßes Schneckengetriebe begrenzen. So kann auch beispielsweise ein zusätzliches Umlenkgetriebe im Getriebegehäuse 18 angeordnet sein, welches die Drehbewegung des Schneckenrades in eine Pendelbewegung umsetzt.

In Figur 2 ist die Abtriebswelle 14 einer erfindungsgemäßen Scheibenwischvorrichtung 10 in eine Explosionsdarstellung gezeigt. Der Getriebeabschnitt 20 ist zylinderförmig ausgebildet und weist an seinem, dem Getriebegehäuse 18 abgewandten Ende eine Verjüngung 28 auf. Die Verjüngung 28 ist derart ausgebildet, dass sie in eine Öffnung 30 des Armabschnitts 24 einführbar ist. Dieses fügen des Getriebeabschnitts 20 an dem Armabschnitt 24, kann kraftschlüssig erfolgen, sodass beispielsweise eine Presspassung zwischen Verjüngung 28 und der Öffnung 30 vorliegt. Verjüngung 28 und Öffnung 30 bilden somit eine Kupplung 31 die zur Verbindung des Getriebeabschnitts 20 mit dem Armabschnitt 24 dient. Die beiden Abschnitte 20, 24 sind beide zylindrisch und besitzen den selben Durchmesser D. Damit schließt sich der Getriebeabschnitt 20 im wesentlichen glatt an den Armabschnitt 24 an. Um eine höhere Verdrehfestigkeit zu erhalten und höhere Drehmomente übertragen zu können, kann die Oberfläche der Verjüngung 28 beispielsweise auch mit einem Rändel versehen werden.

In einer Variation ist es auch möglich, die Verjüngung 28 als Außenvielkant auszubilden, der sich in einen Innenvielkant der Öffnung 30 einfügt, sodass ein Formschluss zwischen Armabschnitt 24 und Getriebeabschnitt 20 entsteht. Prinzipiell kann selbstverständlich auch die Öffnung 30 im Getriebeabschnitt 20 vorgesehen sein und der Armabschnitt 24 über die Verjüngung 28 verfügen.

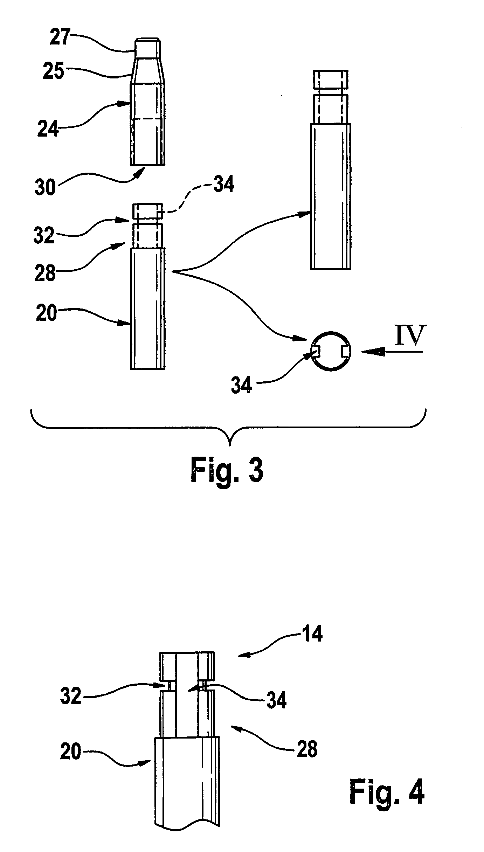

In Figur 3 ist eine Variation der Abtriebswelle aus Figur 2 dargestellt. Die Verjüngung 28 des Getriebeabschnitts 20 weist hierbei noch eine Quernut 32 sowie eine Längsnut 34 auf. Die Öffnung 30 des Armabschnitts 24 ist hier als runde Bohrung ausgeführt, kann aber natürlich auch zur Erzeugung eines Formschlusses entsprechende Führungsstege aufweisen, die in die Längsnuten 34 eingreifen. Sind keine Führungsstege in der Öffnung 30 vorgesehen, so wird der Armabschnitt 24 durch eine Verstemmung mit dem Getriebeabschnitt 20 drehfest verbunden. Armabschnitt 24 und Getriebeabschnitt 20 können auf diese Weise im Montageprozess kräftefrei aufeinander gesteckt werden und danach mittels zweier Stempel, deren Stempelfläche kreuzförmig ausgeführt ist, in den Kreuzungsbereich zwischen Quernut 32 und Längsnut 34 gegeneinander verstemmt werden. Je nach Ausprägung der Quernut 32 und der Längsnut 34 und der Eindringtiefe und Lage der Stempelfläche wird die Verdrehfestigkeit in radialer Richtung bzw. die Zugfestigkeit der Verbindung zwischen Armabschnitt 24 und Getriebeabschnitt 20 in axialer Richtung bestimmt. Sind in der Öffnung 30 Stege vorgesehen, die in die Längsnuten 34 eingreifen, so kann natürlich auf das Verstemmen verzichtet werden. Insbesondere dann, wenn in axialer Richtung keine Zugfestigkeit benötigt wird.

In Figur 4 ist die Verjüngung 28 des Getriebeabschnitts 20 der Abtriebswelle 14 in Detail gezeigt. Die Längsnut 34 und die Quernut 32 stehen im wesentlichen senkrecht aufeinander, sodass durch eine kreuzförmige Stempelfläche die Verbindung zwischen Armabschnitt 24 und Getriebeabschnitt 20 in axialer und radialer Richtung verstärkt wird.

Der Armabschnitt 24 trägt an seinem der Öffnung 30 abgewandten Ende den Konus 25, an den sich der Gewindeabschnitt 27 anschließt. Die Kombination von Konus 25 und Gewindeabschnitt 27 ist bei Wischerwellen 24 üblich, sodass normale an sich bekannte Wischerarme 22 mit dem Armabschnitt 24 in einfacher Weise verbindbar sind.

In einer weiteren Variation können der Getriebeabschnitt 20 und der Armabschnitt 24 auch mittels eines Sechskantes oder eines beliebigen anderen Vielkantes verbunden werden. Auch hier können zusätzliche Quernuten oder Längsnuten eingebracht werden, sodass der Formschluss durch einen Kraftschluss ergänzt und verbessert wird. Prinzipiell ist natürlich auch eine stoffschlüssige Verbindung zwischen Getriebeabschnitt 20 und Armabschnitt 24 möglich. Dies kann beispielsweise durch Kleben, Schweißen oder Laserschweißen erfolgen. Natürlich kann der Stoffschluss auch mit Form- und Kraftschluss wie in den vorherigen Ausführungsbeispielen gezeigt beliebig kombiniert werden. So kann beispielsweise eine Sechskantverbindung problemlos zusätzlich mit einer Klebung verbunden werden oder die Verbindung durch ein Laserschweißverfahren verbessert werden.

## Patentansprüche

1. Scheibenwischvorrichtung (10), insbesondere für eine Windschutzscheibe eines Kraftfahrzeugs, umfassend ein Antriebsteil (12), ein Getriebe (16) und ein das Getriebe (16) umschließendes Gehäuse (18) aus dem eine Abtriebswelle (14) ragt, an der ein Wischerarm (22) befestigbar ist, wobei die Abtriebswelle (14) mehrteilig ausgebildet ist, und die Abtriebswelle (14) zumindest einen ersten, drehfest mit dem Getriebe (16) verbundenen Getriebeabschnitt (20) als erstes Teil und einen zweiten, drehfest mit einem Wischerarm (22) verbindbaren Armabschnitt (24) als zweites Teil aufweist, wobei der Getriebeabschnitt (20) und der Armabschnitt (24) über eine Steckverbindung verbindbar sind, **dadurch gekennzeichnet, dass** der Getriebeabschnitt (20) eine Verjüngung (28) aufweist, die in eine Öffnung (30) des Armabschnittes (24) einführbar ist, und die Verjüngung (28) Längsnuten (34) aufweist und die Öffnung (30) des Armabschnittes (24) gegen die Verjüngung (28) verstemmt ist

2. Scheibenwischvorrichtung (10) nach Anspruch 1 **dadurch gekennzeichnet, daß** die Verjüngung (28) als Aussenvielkant und die Öffnung (30) als Innenvielkant ausgebildet ist.

3. Scheibenwischvorrichtung (10) nach Anspruch 1, **dadurch gekennzeichnet, daß** der Annabschnitt (24) einen Konus (25) aufweist, an den sich ein Gewindeabschnitt (27) anschließt.

## Claims

1. Window-wiping device (10), particularly for a motor vehicle windscreen, comprising a drive part (12), a gear mechanism (16) and a housing (18) which surrounds the gear mechanism (16) and from which a driven shaft (14) protrudes, a wiper arm (22) being fastenable to said driven shaft, wherein the driven shaft (14) is of multi-part design, and the driven shaft (14) has at least one first gear mechanism section (20), which is connected in a rotationally fixed manner to the gear mechanism (16), as a first part, and a second arm section (24), which can be connected in a rotationally fixed manner to a wiper arm (22), as a second part, wherein the gear mechanism section (20) and the arm section (24) can be connected via a plug-in connection, **characterized in that** the gear mechanism section (20) has a tapered portion (28) which can be inserted into an opening (30) in the arm section (24), and the tapered portion (28) has longitudinal grooves (34) and the opening (30) in the arm section (24) is caulked against the tapered portion (28).

2. Window-wiping device (10) according to Claim 1, **characterized in that** the tapered portion (28) is designed as a polygonal stub and the opening (30) is designed as a polygonal socket.

3. Window-wiping device (10) according to Claim 1, **characterized in that** the arm section (24) has a cone (25) to which a threaded section (27) is connected.

## Revendications

1. Dispositif d'essuie-glace (10), notamment pour un pare-brise d'un véhicule automobile, comprenant une partie d'entraînement (12), une transmission (16) et un boîtier (18) entourant la transmission (16), hors duquel sort un arbre de prise de force (14), sur lequel peut être fixé un bras d'essuie-glace (22), l'arbre de prise de force (14) étant réalisé en plusieurs parties, et l'arbre de prise de force (14) présentant au moins une première portion de transmission (20) connectée de manière solidaire en rotation à la transmission (16) en tant que première partie, et une deuxième portion de bras (24) pouvant être connectée de manière solidaire en rotation à un bras d'essuie-glace (22), en tant que deuxième partie, la portion de transmission (20) et la portion de bras (24) pouvant être connectées par le biais d'une connexion enfichable, **caractérisé en ce que** la portion de transmission (20) présente un rétrécissement (28) qui peut être introduit dans une ouverture (30) de la portion de bras (24), et le rétrécissement (28) présente des rainures longitudinales (34) et l'ouverture (30) de la portion de bras (24) est matée contre le rétrécissement (28).

2. Dispositif d'essuie-glace (10) selon la revendication 1, **caractérisé en ce que** le rétrécissement (28) est réalisé sous forme de polygone extérieur et l'ouverture (30) est réalisée sous forme de polygone intérieur.

3. Dispositif d'essuie-glace (10) selon la revendication 1, **caractérisé en ce que** la portion de bras (24) présente un cône (25) auquel se raccorde une portion filetée (27).
